# EUROPEAN PATENT APPLICATION

(11) **EP 4 535 731 A1**
(43) Date of publication of application: **09.04.2025**
(21) Application number: 23201874.7
(22) Date of filing: 05.10.2023
(51) Int. Cl.: H04L 12/413, H04L 12/40

(54) **A METHOD OF OPERATING A PLURALITY COMMUNICATIONS NODES IN A 10BASE-T1S ETHERNET NETWORK**

(71) Applicant: NXP B.V., 5656 AG Eindhoven (NL)
(72) Inventor: Chan, Lu Lu, 5656 AG Eindhoven (NL); Vermeulen, Hubertus Gerardus Hendrikus, 5656 AG Eindhoven (NL); Pannell, Donald Robert, 5656 AG Eindhoven (NL); Evers, Rainer, 5656 AG Eindhoven (NL)
(74) Representative: Schmütz, Christian Klaus Johannes

(57) **Abstract**

A method of operating a plurality of communications nodes in a 10BASE-T1S Ethernet network. The plurality of communications nodes are configured to implement a physical layer collision avoidance, PLCA, process. At least two of the communications nodes are candidate beacon generators. The method comprises: for each of the at least two candidate beacon generators, determining a time delay since a last received beacon, comparing the determined time delay with a threshold value associated with the candidate beacon generator, and if the time delay exceeds the threshold value then setting that candidate beacon generator as an in-use beacon generator; and the in-use beacon generator transmitting a beacon to define the start of a PLCA cycle, thereby triggering a transmit opportunity for each of the other communication nodes.

## Description

### Field

The present disclosure relates to a method of operating a plurality of communications nodes in a 10BASE-T1S Ethernet network.

### Summary

According to a first aspect of the present disclosure there is provided a method of operating a plurality of communications nodes in a 10BASE-T1S Ethernet network, wherein the plurality of communications nodes are configured to implement a physical layer collision avoidance, PLCA, process, and wherein at least two of the communications nodes are candidate beacon generators, wherein the method comprises:
for each of the at least two candidate beacon generators, determining a time delay since a last received beacon, comparing the determined time delay with a threshold value associated with the candidate beacon generator, and if the time delay exceeds the threshold value then setting that candidate beacon generator as an in-use beacon generator; and
the in-use beacon generator transmitting a beacon to define the start of a PLCA cycle, thereby triggering a transmit opportunity for each of the other communication nodes.

Advantageously, such a method provides redundancy such that the Ethernet network can continue to utilise PHY-Level Collision Avoidance (PLCA), even if the in-use beacon generator fails.

In one or more embodiments, each of the candidate beacon generators comprises a nodeId.

In one or more embodiments, setting a candidate beacon generator as the in-use beacon generator comprises assigning the nodeId of that candidate beacon generator as an activeBeaconGeneratorNodeId, which identifies which of the plurality of communications nodes should function as the in-use beacon generator.

In one or more embodiments, setting a candidate beacon generator as the in-use beacon generator comprises assigning a nodeId of zero to that candidate beacon generator.

In one or more embodiments, the method further comprises assigning a non-zero nodeId to each of the candidate beacon generators that are not the in-use beacon generator.

In one or more embodiments, assigning a nodeId of zero to the candidate beacon generator comprises changing the nodeId from a previous-value to zero. The method may further comprise:
determining whether or not the previous-value corresponded to a last transmit opportunity in the PLCA cycle; and
if the previous-value did correspond to the last transmit opportunity in the PLCA cycle, then reducing the plca_node_count by one.

In one or more embodiments, assigning a nodeId of zero to the candidate beacon generator comprises changing the nodeId from a previous-value to zero. The method may further comprise:
storing the previous-value in memory; and
assigning the previous-value as the nodeId for the candidate beacon generator in response to another candidate beacon generator being set as the in-use beacon generator.

In one or more embodiments, a different threshold value is associated with each of the candidate beacon generators.

In one or more embodiments, the method further comprises:
determining if each candidate beacon generator is in a wake-up mode of operation or an active mode of operation;
if a candidate beacon generator is in the wake-up mode of operation, then comparing the determined time delay with a wake-up threshold value for the candidate beacon generator;
if a candidate beacon generator is in the active mode of operation, then comparing the determined time delay with an active threshold value for the candidate beacon generator.

In one or more embodiments, the active threshold value for a candidate beacon generator is different to the wake-up threshold value for the candidate beacon generator.

In one or more embodiments, the active threshold value for a first candidate beacon generator is greater than the wake-up threshold value for the first candidate beacon generator.

In one or more embodiments, the active threshold value for a second candidate beacon generator is shorter than the wake-up threshold value for the second candidate beacon generator.

In one or more embodiments, the wake-up threshold value for one of the candidate beacon generators is shorter than the wake-up threshold value for another candidate beacon generator.

In one or more embodiments, the wake-up threshold value is longer than a single PLCA cycle.

In one or more embodiments, the threshold values are based on integer multiples of the duration of a transmit opportunity; and / or the threshold values are based on integer multiples of the duration of a PLCA cycle.

There is also disclosed a network configured to perform any method disclosed herein.

There is also disclosed a 10BASE-T1S Ethernet network comprising a plurality of communications nodes, wherein the plurality of communications nodes are configured to implement a physical layer collision avoidance (PLCA) process, and wherein at least two of the communications nodes are candidate beacon generators, wherein the network is configured to:
for each of the at least two candidate beacon generators:
   determine a time delay since a last received beacon,
   compare the determined time delay with a threshold value associated with the candidate beacon generator, and
   if the time delay exceeds the threshold value then set that candidate beacon generator as an in-use beacon generator;
wherein the in-use beacon generator is configured to transmit a beacon to define the start of a PLCA cycle, thereby triggering a transmit opportunity for each of the other communication nodes.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 depicts a communications network that includes multiple communications nodes;
Figure 2 illustrates an Ethernet communication network that includes two nodes;
Figure 3 shows schematically an example embodiment of various components of a 10BASE-T1S Ethernet network;
Figures 4 to 10 schematically illustrate timing diagrams that are used to describe different operational scenarios of the network of Figure 3; and
Figure 11 illustrates an example of a method of operating a plurality of communications nodes in a 10BASE-T1S Ethernet network according to the present disclosure.

### Detailed Description

Modern automobiles include various electronic control units (ECUs) that implement, for example, engine control, power train control, airbag systems, antilock brake systems, cruise control, electric power steering, audio systems, window control systems, door control systems, mirror adjustment systems, and battery and recharging systems for hybrid/electric cars. The ECUs communicate with each other in an automobile via in-vehicle network (IVN) technologies such as Ethernet.

Ethernet is a well-known technology and the Institute of Electrical and Electronic Engineers (IEEE) 802.3 Working Group defines a collection of standards that define physical layer and data link layer media access control (MAC) for wired Ethernet. An emerging IEEE standard that may be particularly applicable to in-vehicle networks is IEEE 802.3cg, which is a protocol for 10 Mb/s single twisted-pair Ethernet that enables multiple nodes to connect to the same twisted-pair wire, also referred to as a "shared media."

The IEEE 802.3cg physical layer (PHY) utilizes CSMA/CD (Carrier Sense Multiple Access, Collision Detection) for media access control. When a collision occurs, there will be a random back off. This random back off increases upon every collision. Multiple nodes backing off results in a large amount of delay introduced when transmitting on the bus. There will also be a long idle time while all nodes back off, which in turn allows another node to jump in. This results in a significant amount of time lost where the bus could have been used, which results in a large waste of the available bandwidth. This is undesirable, so PHY-Level Collision Avoidance (PLCA) was introduced.

PLCA is a protocol that is defined within IEEE 802.3cg to provide deterministic performance in in-vehicle networks. For example, for PLCA in 10BASE-T1S, a beacon generator (that can also be referred to as a coordinator) is used to transmit a beacon at the start of a PLCA cycle. The other nodes on the bus use these beacons to determine when their individual transmit opportunity (TO) occurs, such that they can transmit on the bus during that transmit opportunity without collisions.

However, in a PHY-Level Collision Avoidance (PLCA) bus, if the beacon generator (which is defined by the standard as the node that has nodeId == 0) fails silently (e.g., it stops sending any data), then the next PLCA cycle will not be started due to the lack of the transmission of a beacon by the failed beacon generator. It would not matter if all other nodes are still functional, because, as defined in the standard, all other nodes would wait to receive a beacon before transmitting anything. This means that the correct operation of the PLCA bus is critically dependent on a working beacon generator node.

According to the current IEEE 802.3cg standard, after 255 transmit opportunities (TOs) without detecting a beacon, the PLCA mode is disabled and the nodes connected to the bus revert back to a Carrier Sense Multiple Access / Collision Detect (CSMA/CD) mode which, as mentioned above, may not be an acceptable mode of operation either. This is undesirable because: (1) of the long timeout (255 * TO_timeouts (where a TO_timeout = 20 bits @ 100ns), which is equal to 510 us); and (2) CSMA/CD is not deterministic due to its random backoff times as a result of collisions; and (3) less network segment bandwidth is available due to the random backoffs.

These issues represent a problem for time sensitive communications.

As will be discussed in detail below, examples of the present disclosure can address these problems by making PLCA more robust by selecting and utilising an alternate beacon generator node after detecting that the original beacon generator node has stopped working. The examples described below can be compliant with the IEEE 802.3cg standard.

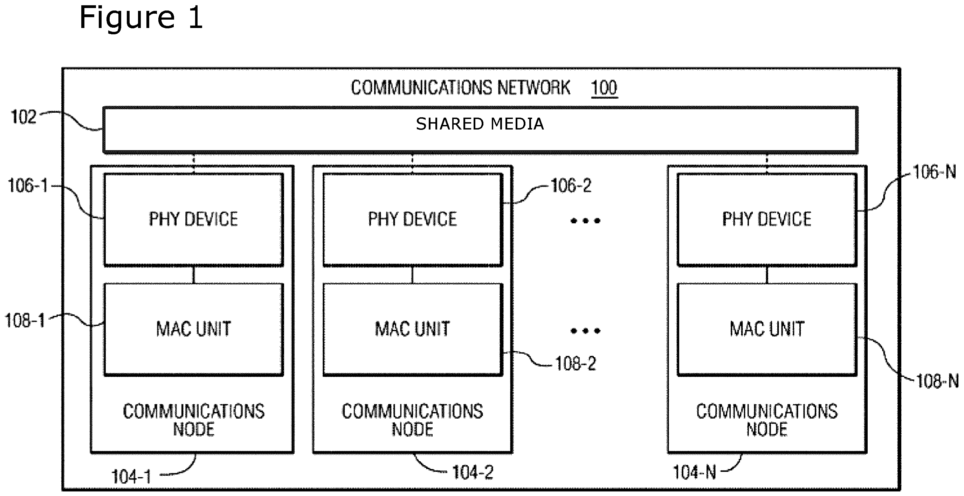

Figure 1 depicts a communications network 100 that includes multiple communications nodes 104 - 1 , 104 - 2 , ... , 104 -N (where N is an integer greater than one) that communicate through a shared media 102, such as twisted-pair wires. In Figure 1, each communications node includes a corresponding physical layer (PHY) device 106 - 1 , 106 - 2 ,..., 106 -N (also referred to as a transceiver) and a corresponding media access control (MAC) unit 108 - 1 , 108 - 2 , ..., 108 -N. The communications network is configured to perform media access arbitration to orchestrate access to the shared media. The MAC unit supports collision detection (CSMA/CD) and the PLCA (with and without QoS) is in the reconciliation sublayer, which is typically part of the PHY device. The communication nodes may be end nodes that include, for example, various electronic control units (ECUs) for engine control, power train control, airbags, antilock brakes, cruise control, electric power steering, audio systems, windows, doors, mirror adjustment, battery and recharging systems for hybrid / electric cars, and many more. The communications nodes may also be nodes such as Ethernet bridges. Although the illustrated communications nodes are shown with certain components and described with certain functionality herein, other embodiments of the communications nodes may include fewer or more components to implement the same, less, or more functionality.

In this example, the communications network 100 is an Ethernet network that utilizes CSMA/CD for media access control and that is compatible with the IEEE 802.3cg protocol, which currently specifies the physical layer for 10 Mb/s over a single twisted-pair cable. The PHY devices 106 - 1 , 106 - 2 ,..., 106 -N are configured to manage physical layer communications functions according to the IEEE 802.3cg specification. For example, the PHY devices transmit analog signals onto the shared media and receive analog signals from the shared media. The PHY devices may also protect other components in the node from extreme electrical conditions, e.g., electrical surges, which may occur on the shared media.

The MAC units 108 - 1, 108 - 2 ,..., 108 -N are configured to perform media access control for the corresponding communications nodes 104 - 1 , 104 - 2 ,..., 104 -N. The MAC units may be implemented within a processor, such as a microcontroller, a host processor, a host, a digital signal processor (DSP), or a central processing unit (CPU). In some examples, at least one of the MAC units is included within the PHY layer module of an IEEE 802.3cg compatible Ethernet communications device. Although the illustrated MAC units are shown in Figure 1 as included in the corresponding communications nodes, in some embodiments, the MAC units may be separated from the corresponding communications nodes.

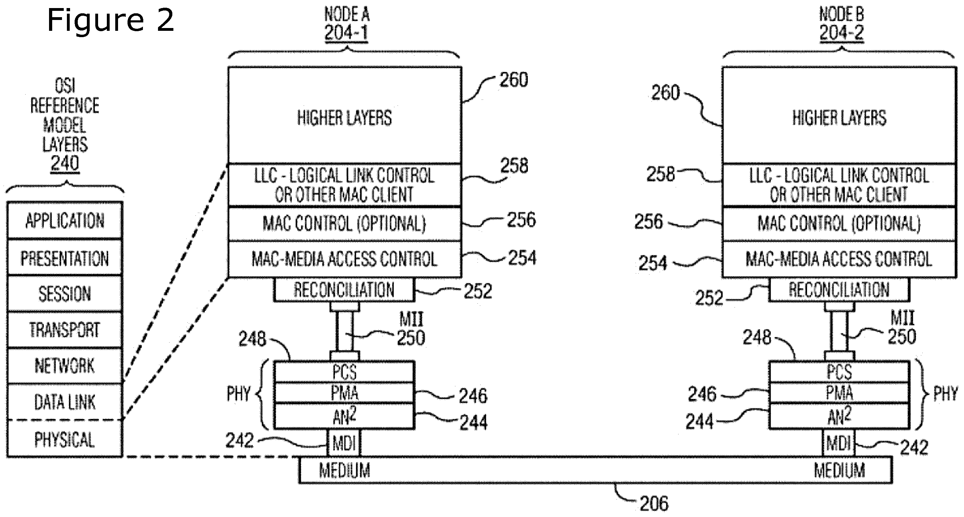

Figure 2 illustrates an Ethernet communication network that includes two nodes, node A 204 - 1 and node B 204 - 2 , in an Ethernet based in-vehicle network that is, for example, compatible with IEEE 802.3cg. Figure 2 also depicts the layers of the OSI reference model 240 as well as an expanded view of the physical layer and the data link layer. As shown in Figure 2, the OSI reference model includes the physical layer (also referred to as layer 1 or L1), the data link layer (also referred to as layer 2 or L2), the network layer (also referred to as layer 3 or L3), the transport layer (also referred to as layer 4 or L4), the session layer (also referred to as layer 5 or L5), the presentation layer (also referred to as layer 6 or L6), and the application layer (also referred to as layer 7 or L7). Elements in the expanded view of the physical layer include media-dependent sublayers of the transmission medium 206, a media-dependent interface (MDI) 242, an auto-negotiation layer (AN2) 244, a physical medium attachment (PMA) 246, the physical coding sublayer (PCS) 248, media-independent sublayers of a media-independent interface (MII) 250, and a reconciliation sublayer 252. The reconciliation sublayer 252 may comprise 10BASE-T1S PLCA. The 10BASE-T1S specification was developed as part of the IEEE 802.3cg standard, which was published in February 2020. 10BASE-T1S provides the missing link in the automotive Ethernet ecosystem, enabling true Ethernet-to-the-edge connectivity and addressing the needs of zonal architectures.

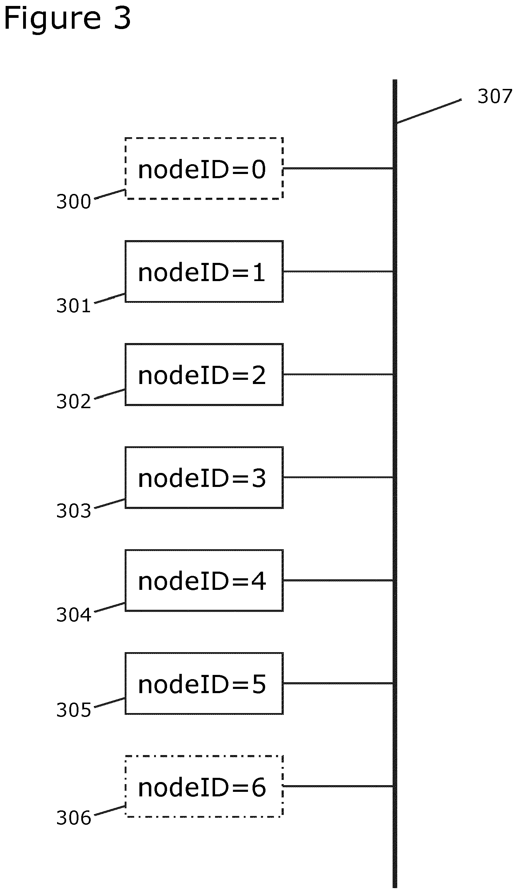

Figure 3 depicts an expanded view of a communications network 300 that includes three communications nodes 304 - 1 , 304 - 2 , and 304 - 3 that communicate over a shared media 302 according to the IEEE 802.3cg standard. As shown in Figure 3, each communications node includes a PHY device 306, a receive component of a MAC unit (referred to as an RX MAC 312), a receive FIFO 314, an end node function 316, transmit Quality of Service (QoS) queues 318, a frame selector 320, and a transmit component of a MAC unit (referred to as a TX MAC 322). In this example, the PHY devices 306 of the communications network implement PLCA on the IEEE 802.3cg 10BASE-T1S network in multidrop mode. PLCA is implemented at the physical layer and may be integrated with the reconciliation sublayer 252 (FIG. 2). An operational principle of PLCA, when PLCA is used, is that each PHY device is assigned a node identifier (nodeID) that is unique across the shared media and the PHY devices can only transmit data during specific ordered slots that correspond to their respective ID. These ordered slots can be referred to as transmit opportunities (TOs).

Figure 3 shows schematically an example embodiment of various components of a 10BASE-T1S Ethernet network. The network in this example includes seven communications nodes 300-306, which each have a unique nodeID (i.e., a node identifier) in the range of 0 to 6. Each of the communications nodes 300-306 is connected to a PHY-Level Collision Avoidance (PLCA) bus 307. Therefore, the plurality of communications nodes 300-306 are configured to implement a PLCA process.

At least two of the communications nodes 300-306 are candidate beacon generators. That is, they are capable of transmitting a beacon to define the start of a PLCA cycle. In the example of Figure 3, the first node 300 and the last node 306 are candidate beacon generators. This is represented by these nodes 300, 306 being shown with a dashed / dot-dashed outline. In other examples there may be more than two candidate beacon generators. As will be discussed in detail below, one of the candidate beacon generators can be operated as an in-use beacon generator (which can also be referred to as an active beacon generator (ABG)). The in-use beacon generator will transmit a beacon to define the start of a PLCA cycle, thereby triggering a transmit opportunity for each of the other communication nodes. The other one of the candidate beacon generators can be operated as a backup beacon generator (BBG), such it provides redundancy for the in-use beacon generator. The remaining nodes (the second to the penultimate nodes 301-305) are not capable of transmitting a beacon, and therefore they can be referred to as non-beacon generators (NBGs)

The network can set one of the candidate beacon generators 300, 306 as the in-use beacon generator by, for each of the candidate beacon generators 300, 306, determining a time delay since a last received beacon. For instance, a counter associated with each of the candidate beacon generators 300, 306 can start counting when that candidate beacon generator 300, 306 receives a beacon, and the counter can be reset each time another beacon is received. For each of the candidate beacon generators 300, 306, the network can then compare the determined time delay with a threshold value associated with that candidate beacon generator. If the time delay exceeds the threshold value for one of the candidate beacon generators 300, 306, then the network will set that candidate beacon generator as the in-use beacon generator. As indicated above, the in-use beacon generator will then transmit beacons to define the start of each subsequent PLCA cycle.

Therefore, for the network of Figure 3, if the in-use beacon generator associated with the PLCA bus fails silently then another beacon generator is available to start transmitting beacons. This enables operation on the PLCA bus to continue without having to resort to CSMA/CD. As discussed above, CSMA/CD can be considered sub-optimal in some applications. In this way, the network of Figure 3 introduces the concept of Active and Backup Beacon Generators that can swap functions depending on the required situation, and can beneficially ensure continued operation on a PLCA bus. Advantageously, the correct operation of the PLCA bus is not critically dependent on a single beacon generator node.

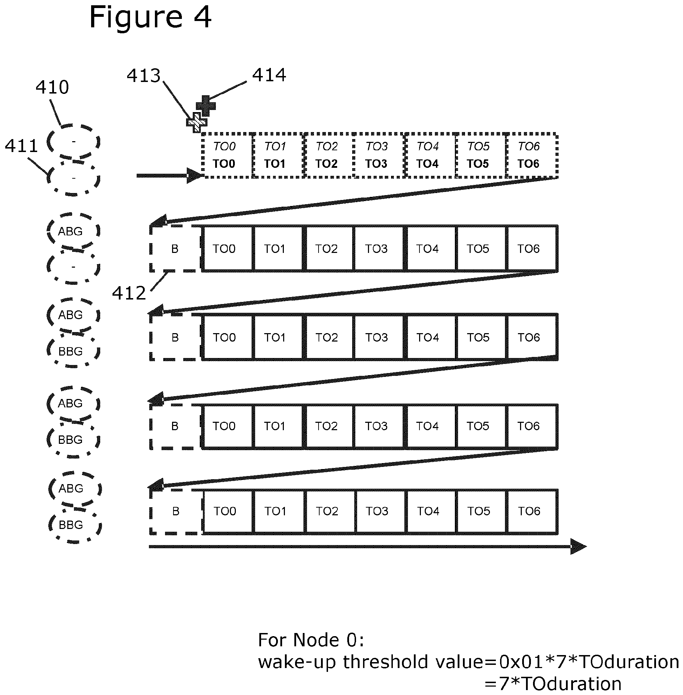

Figures 4 to 10 schematically illustrate timing diagrams that will be used to describe different operational scenarios of the network of Figure 3.

In each of Figures 4 to 10, dashed ellipses (an example of which is labelled with reference number 410 in Figure 4) are shown on the left-hand side. The dashed ellipses show the status of Node 0 (i.e., one of the candidate beacon generators) for the associated PLCA cycle that is shown to the right of it. Also shown on the left-hand side is a dot-dashed ellipse (an example of which is labelled with reference number 411 in Figure 4) that shows the status of Node 6 (i.e., the other of the candidate beacon generators) for the associated PLCA cycle that is shown to the right of it.
- If "ABG" is shown in one of the ellipses in the figures, then the corresponding candidate beacon generator has been set as the in-use beacon generator. (As indicated above, active beacon generator (ABG) is another label for the in-use beacon generator.)
- If "BBG" is shown in one of the ellipses in the figures, then the corresponding candidate beacon generator is operating as a backup beacon generator. That is, the candidate beacon generator is available to be operated as an active beacon generator, but it is not doing so at that time because the other candidate beacon generator is actively transmitting beacons. In this way, the backup beacon generator is providing redundancy such that it can start transmitting beacons if the in-use beacon generator were to fail.
- If "-" is shown in one of the ellipses in the figures, then the corresponding candidate beacon generator is online / awake, but has not yet assumed the role of an in-use beacon generator or a backup bacon generator.
- If no ellipse is shown for a PLCA cycle, then the associated candidate beacon generator is not online.

Each PLCA cycle in Figures 4 to 10 includes seven transmit opportunities (TOs) - TO0 to TO6; one for each of the communications nodes. If an in-use beacon generator is active, then a beacon (an example of which is labelled with reference 412 in Figure 4) is transmitted before the first transmit opportunity (TO0). A beacon that is shown with a dashed outline is one that has been transmitted by Node 0. A beacon that is shown with a dot-dashed outline is one that has been transmitted by Node 6.

A TO that has a solid outline is one that follows a transmitted beacon for that PLCA cycle, and therefore represents a transmit opportunity in a regular PLCA cycle. A TO that has a dotted outline is one that does not follow a transmitted beacon, and therefore represents a period of time during a recovery phase of the network. It will be appreciated that such a period of time does not actually represent a usable transmit opportunity because none of the communication nodes will transmit any data during their transmit opportunity; this is because they won't have received a beacon for that PLCA cycle. Nonetheless, it is convenient to illustrate these periods of time as "would-be" transmit opportunities because the counters that are used to determine how long it has been since a beacon has been received count periods of time that correspond to a single transmit opportunity timeout, with the timeout indicating the end of that TO without having any transmissions. If a TO was used, then that transmit opportunity's duration would depend on the frame length that is transmitted.

Furthermore, each TO with a dotted outline includes one or two counter values. Counter values in italic text represent the time delay since Node 0 last received a beacon. Counter values in bold text represent the time delay since Node 6 last received a beacon. As will be discussed in detail below, Nodes 0 and 6 compare these counter values with thresholds to determine whether or not they should assume the role of the in-use beacon generator (ABG).

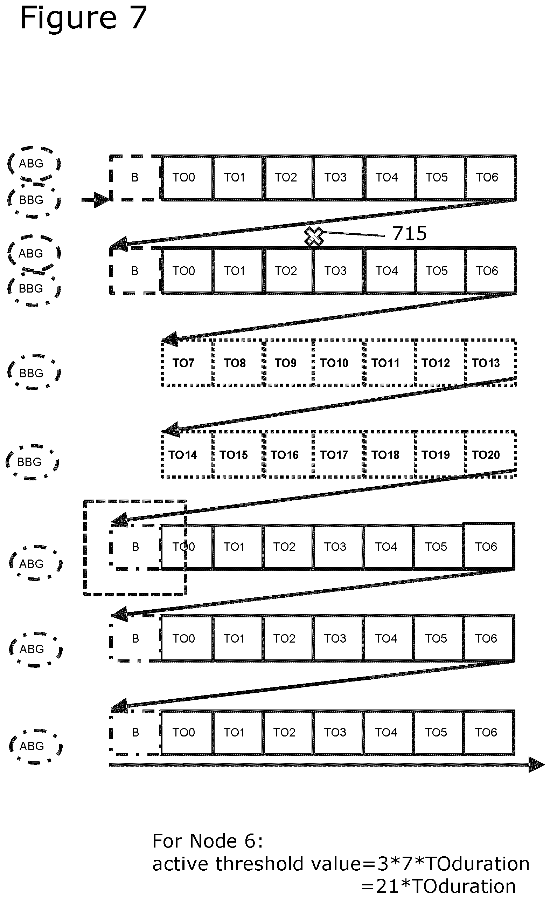

A pattern-filled + (an example of which is labelled with reference 413 in Figure 4) is used in the drawings to indicate the time at which Node 0 wakes up or recovers after a failure. A solid-filled + (an example of which is labelled with reference 414 in Figure 4) is used in the drawings to indicate the time at which Node 6 wakes up or recovers after a failure. A pattern-filled x (an example of which is labelled with reference 715 in Figure 7) is used in the drawings to indicate the time at which Node 0 fails.

As discussed above with reference to Figure 3, for each of the candidate beacon generators, a time delay since a last received beacon is determined and then compared with a threshold value. If the time delay exceeds the threshold value, then that candidate beacon generator is set as the in-use beacon generator (ABG). In each of the examples that follows, a different threshold value is associated with each of the two candidate beacon generators. In this way, the network can be configured such that one of the candidate beacon generators assumes the role of in-use beacon generator in preference to the other candidate beacon generator. That is, a lower threshold value can be used for a preferred candidate beacon generator such that is more likely to assume the role of in-use beacon generator before the other candidate beacon generator does.

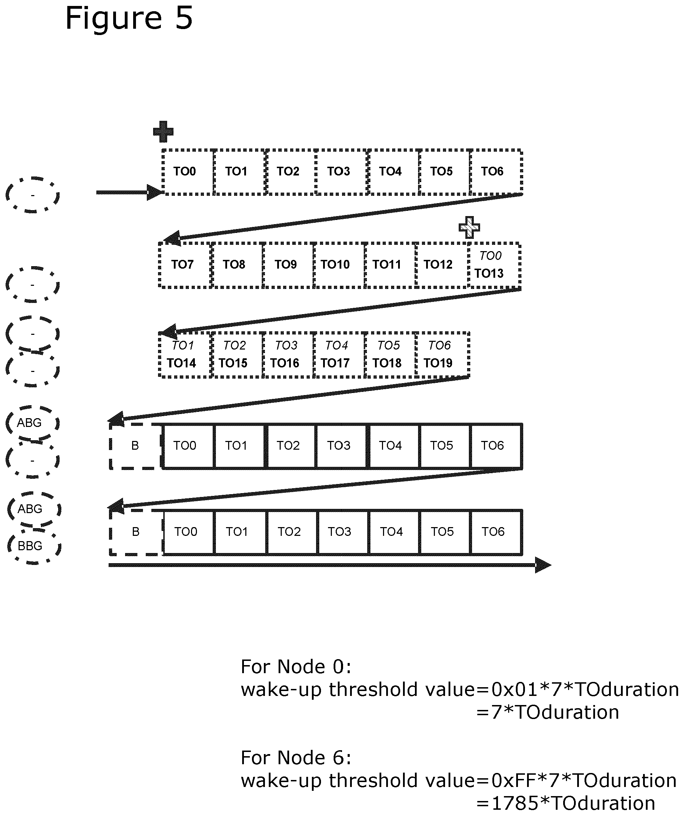

Also, the network can determine if each candidate beacon generator is in a wake-up mode of operation or an active mode of operation. If a candidate beacon generator is in the wake-up mode of operation, then its determined time delay is compared with a wake-up threshold value. If a candidate beacon generator is in the active mode of operation, then its determined time delay is compared with an active threshold value. The active threshold value for a candidate beacon generator in the examples of Figures 5 to 11 is different to the wake-up threshold value for each of the candidate beacon generators. In the examples of Figures 4 to 10:
- the wake-up threshold value for Node 0 is shorter than the active threshold value for Node 0. This means that Node 0 will assume the role of in-use beacon generator sooner during wake-up than during an active mode of operation;
- the wake-up threshold value for Node 6 is longer than the active threshold value for Node 6. This means that Node 6 will assume the role of in-use beacon generator later during wake-up than during an active mode of operation;
- the wake-up threshold value for Node 0 is shorter than the wake-up threshold value for Node 6. This means that Node 0 will assume the role of in-use beacon generator quicker after a wake-up than Node 6 will; and
- the active threshold value for Node 0 is the same as the active threshold value for Node 6. This means that both Node 6 and Node 0 will wait the same period of time after the absence of a beacon before assuming the role of in-use beacon generator in the active mode of operation. However, if there are more than two candidate beacon generators then it can be advantageous for each candidate beacon generator to have different active threshold values to avoid any collisions with multiple backup beacon generators trying to assume the role of in-use beacon generator at the same time. In case of collision with beacons from two beacon generators, both will go into resync state and act according to their wake up behaviour.

Using separate wake-up and active threshold values can be beneficial. The wake-up threshold values that are applied at start up / wake up of the candidate beacon generator node can be used to apply a preference for which one of the candidate beacon generators is initially set as the in-use beacon generator (ABG) as discussed above, while being tolerable to different node boot up times. Use of the different active threshold values allows for a quick transition to a backup beacon generator if the in-use beacon generator (ABG) fails. The event that a beacon generator fails can be tracked and monitored, such that the failure can be escalated so that the failed beacon generator can be repaired or replaced if necessary.

It will be appreciated that any of the threshold values described herein can be programmable / configurable.

The following pseudocode represents an example operation of the examples of Figures 4-10:
*Example values (unsigned 16 bits for wakeUpThreshold and 8 bits for beaconDetThreshold):*
*For nodeId* = *0* - *the preferred active Beacon Generator (ABG)*
   - *wakeUpThreshold* = *0x0001*
   - *beaconDetThreshold* = *0x03*
*For nodeld = 6* - *the non-preferred active Beacon Generator (BBG)*
   - *wakeUpThreshold* = *0x00FF*
   - *beaconDetThreshold* = *0x03*
*For nodeld = 1:5* - *non-Beacon Generators (NBG)*
   - *wakeUpThreshold* = *0x0000*
   - *beaconDetThreshold* = *0x00*
*A value of 0x00 disables the Backup Beacon Generator function on a device.*
* For the preferred candidate beacon generator (Active Beacon Generator (ABG)) 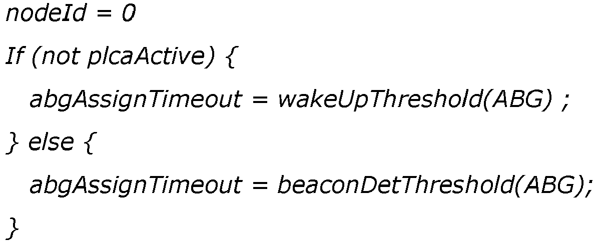
* For the non-preferred candidate beacon generator (Backup Beacon Generator (BBG)) 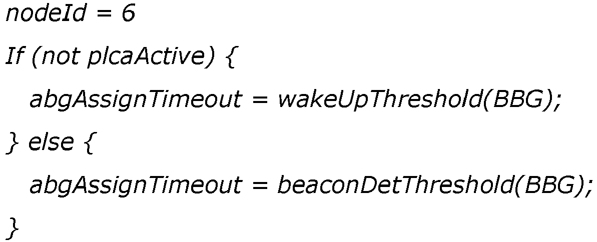
* For the non-beacon generators (NBGs)

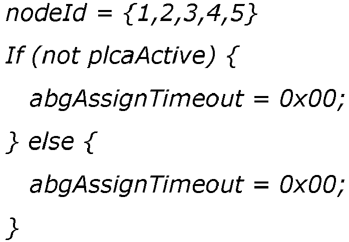

The preferred Active Beacon Generator may be part of a central compute node, which can take a long time to boot up, whereas edge nodes that are not part of such a large ECU may boot up quicker. Therefore, it can be beneficial to have a large difference between the *wakeUpThreshold(ABG)* and the *wakeUpThreshold(BBG).* In some applications, the wake up value may need to be represented by a larger number of bits. It can be beneficial to find a resolution that is fast enough, but also has enough range to differentiate between nodes. Additionally, one could make a "unit" parameter as well for this value to be configurable for more flexibility on what resolution the wakeUpThreshld is based on. An example of this:
- wakeUpThresholdUnit = Transmit Opportunity timeout duration * number of nodes on the PLCA bus
- wakeUpThresholdUnit = 1000
- In the examples, a wakeUpThreshold of 8-bit is used for illustration purposes, and a wakeUpThresholdUnit being numNodes * TOduration

* For the preferred candidate beacon generator (Active Beacon Generator (ABG))

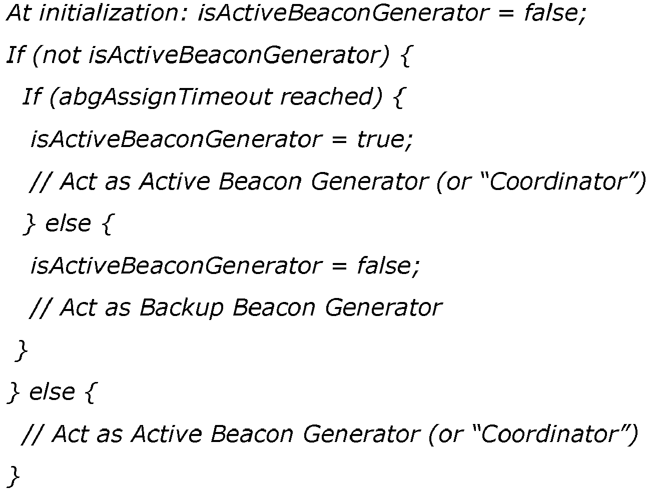

* For the non-preferred candidate beacon generator (Backup Beacon Generator (BBG))

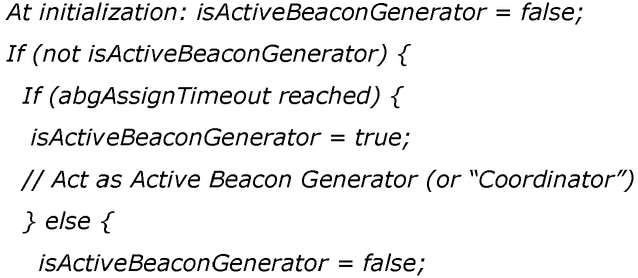

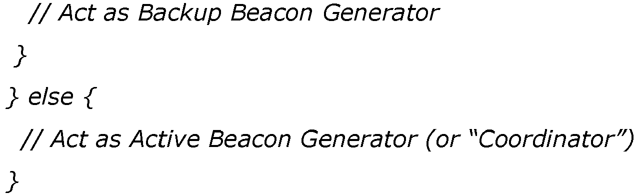

The node with nodeId = 0 will get the wakeUpThreshold(ABG) as it is the desired ABG. The other beacon generator (BG) capable nodes (i.e., BBG nodes) will get the wakeUpThreshold(BBG). If there is more than one BBG, then their corresponding beaconDetThreshold values (i.e., active threshold values) should be different values, to prevent more than one of them trying to take over as the ABG at the same time.

In normal cases (with power up times of the nodes being not too different from each other), the node with nodeId 0 should become the ABG.

When an in-use beacon generator fails and then restarts, it will use the wakeUpThreshold value (i.e., the wake-up threshold value), but it may detect that there is already a beacon being transmitted on the bus by the other candidate beacon generator (that has assumed the role of in-use beacon generator), and thus it will not become the in-use beacon generator again. In such an application, this means that the wakeUpThreshold should be longer than a single PLCA normal cycle, such that it can detect whether or not there is already a beacon being transmitted on the bus.

We will now describe each of the examples of Figures 5 to 11 in turn. For each of these examples, the following threshold values are used:
- wake-up threshold value for Node 0 = *wakeUpThreshold(ABG)***numberNodes***TOduration,* where *wakeUpThreshold(ABG)* = *0x01.*
- wake-up threshold value for Node 6 = *wakeUpThreshold(BBG)***numberNodes***TOduration,* where *wakeUpThreshold(BBG)* = *0xFF.*
- *Active threshold value for Node 0* = *beaconDetThreshold(ABG)* **numberNodes***TOduration,* where *beaconDetThreshold(ABG)* = *3*
- *Active threshold value for Node 6* = *beaconDetThreshold(BBG)* **numberNodes*TOduration,* where *beaconDetThreshold(BBG)* = *3*

It can be seen that each of the threshold values is a multiple of a PLCA cycle, as implemented by setting the threshold value as the product of: a variable, the number of nodes in the network, and the duration of a transmit opportunity (TO). That is, the threshold values can be based on integer multiples of the duration of a transmit opportunity and / or based on integer multiples of the duration of a PLCA cycle.

Optionally, the curID counter in the node normally used to keep track of which node the current Transmit Opportunity belongs to could act as the counter to which to compare the wakeUpThreshold and beaconDetThresholds. The curID counter has a TOduration as a unit, covering both when the TO is made use of during data transmission and when it times out without any data transmission.

In Figure 4, both Node 0 and Node 6 wake up at the same time.

Node 0 is initially assigned to be the in-use beacon generator. It has a wake-up threshold value = 0x01*numberNodes*TOduration. As discussed above, this ensures there are no active beacon generators already on the bus.

Node 0 takes over as the in-use beacon generator once the time delay since the last received beacon exceeds the wake-up threshold value for Node 0. The time delay associated with Node 0 is shown in Figure 4 as the count of TO's shown in italics that starts immediately after Node 0 wakes up. The count for Node 0 exceeds its wake-up threshold value after the seven TOs that are shown in the top line in Figure 4, and therefore Node 0 transmits its first beacon 512 for the second line that is shown in Figure 4, which represents the first PLCA cycle for the operation that is illustrated in Figure 4.

Node 6 is also a candidate beacon generator, and it is initialized with its wake-up threshold value. The time delay associated with Node 6 is shown in Figure 4 as the count of TO's shown in bold that starts immediately after Node 6 wakes up. However, the count for Node 6 does not reach its wake-up threshold value because Node 0 transmits a beacon. Therefore, Node 6 becomes the BBG after it detects that beacon.

In Figure 5, Node 0 wakes up a bit later than Node 6. That is, the non-preferred candidate beacon generator node (Node 6) wakes up and starts counting before the preferred candidate beacon generator node (Node 0) wakes up. Nonetheless, as can be seen from Figure 5, the count for Node 6 still does not reach its wake-up threshold value before Node 0 transmits a beacon. Therefore, Node 0 is assigned as the in-use beacon generator node.

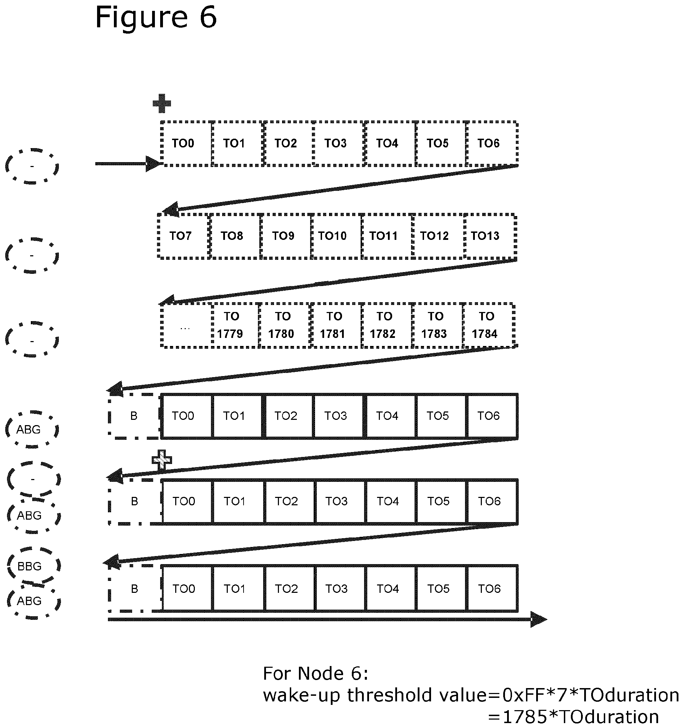

In Figure 6, Node 0 wakes up much later than Node 6. In this example, the count for Node 6 reaches its wake-up threshold value (1785*TOduration) before Node 0 transmits a beacon. Therefore, Node 6 is assigned as the in-use beacon generator node because it is BG capable. Node 0 wakes up afterwards. However, Node 0 detects that there is already a beacon on the bus before its wake-up threshold is exceed, and therefore Node 0 becomes the BBG.

In Figure 7, Node 0 is the active beacon generator and is transmitting beacons. However, Node 0 then fails partway through the second PLCA cycle that is shown in Figure 7. Node 6 was a BBG, and in response to its active threshold value (21*TOduration) being exceeded without Node 6 detecting a beacon, Node 6 is set as the new in-use beacon generator (ABG). Therefore, Node 6 starts transmitting beacons such that the PLCA bus can continue to operate.

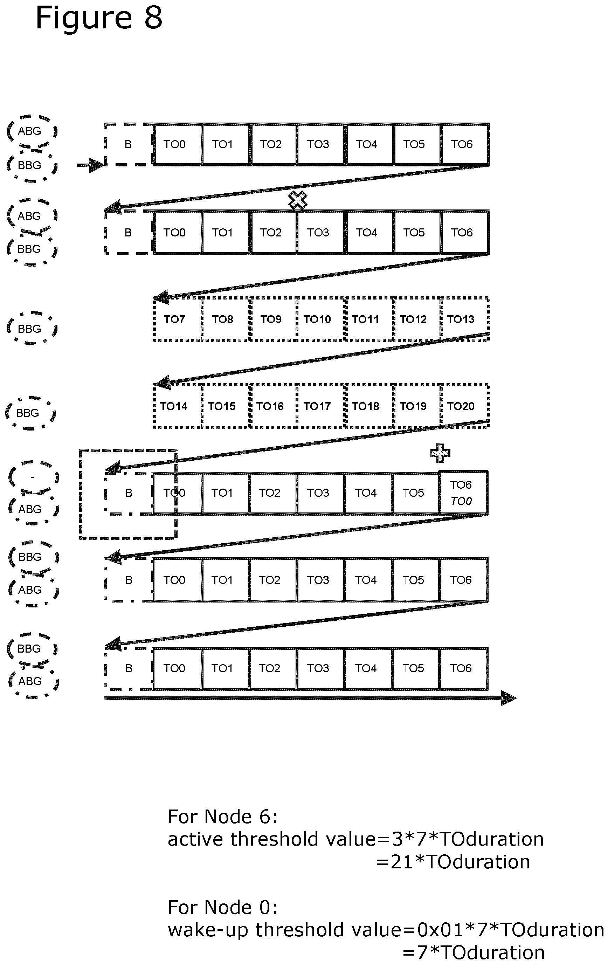

In Figure 8, Node 0 is the active beacon generator and is transmitting beacons. However, Node 0 then fails partway through the second PLCA cycle that is shown in Figure 8. Node 6 was a BBG, and in response to its active threshold value (21*TOduration) being exceeded without Node 6 detecting a beacon, Node 6 is set as the new in-use beacon generator (ABG) and it starts transmitting beacons such that the PLCA bus can continue to operate. Node 0 then recovers. However, the recovered Node 0 detects a beacon before its wake-up threshold value is exceeded, and therefore Node 0 will become a BBG.

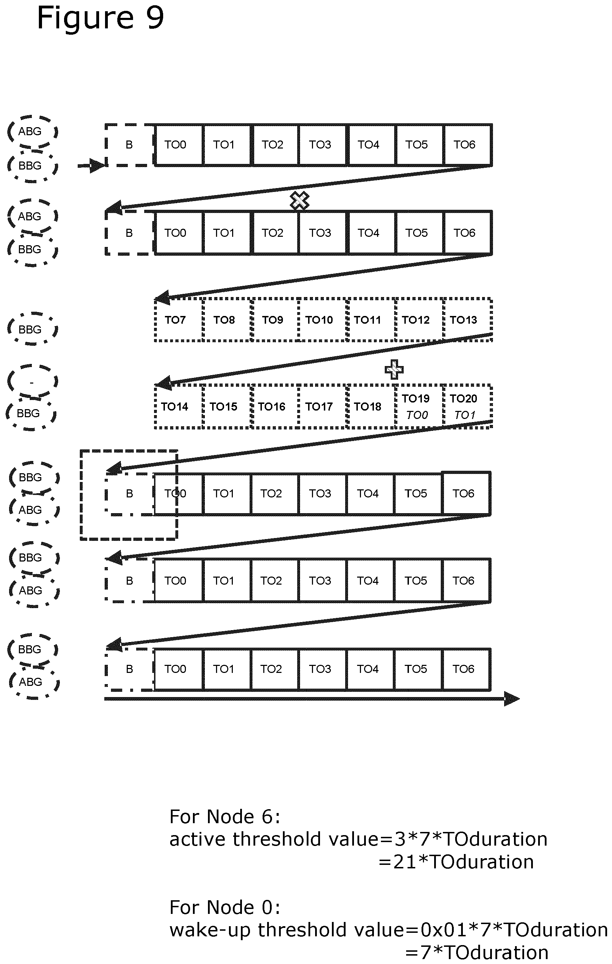

In Figure 9, Node 0 is the active beacon generator and is transmitting beacons. However, Node 0 then fails partway through the second PLCA cycle that is shown in Figure 9. Node 6 was a BBG, and it starts counting TOs since it last received a beacon. However, before that count (shown in bold in Figure 9) reaches its active threshold value (21*TOduration), Node 0 recovers and starts its own count (shown in italics in Figure 9). For the example of Figure 9, the count for Node 6 exceeds its active threshold value before the count for Node 0 exceeds its wake-up threshold value. Therefore, Node 6 is set as the new in-use beacon generator (ABG) and it starts transmitting beacons such that the PLCA bus can continue to operate. Node 0 becomes a BBG.

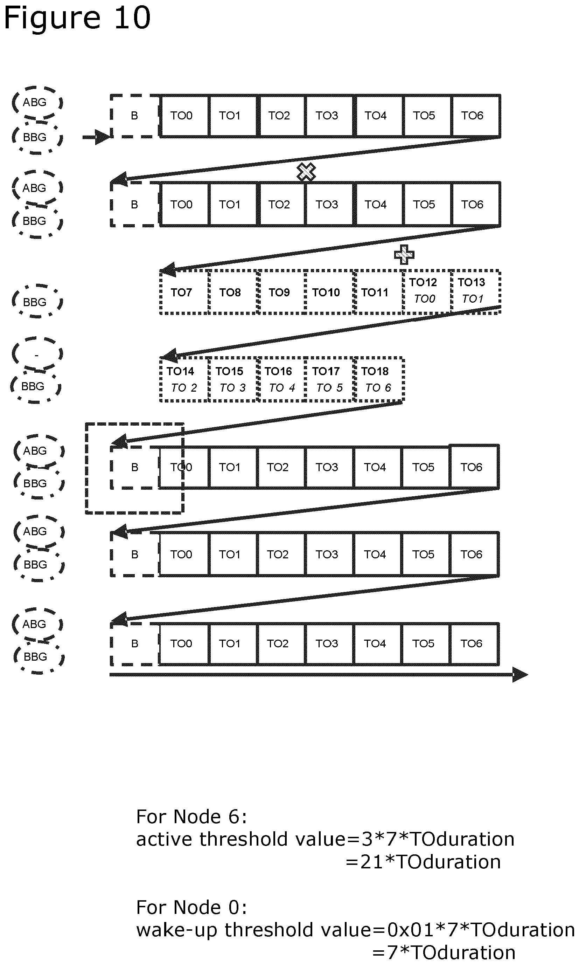

In Figure 10, Node 0 is the active beacon generator and is transmitting beacons. However, Node 0 then fails partway through the second PLCA cycle that is shown in Figure 10, but recovers shortly afterwards. Node 6 was a BBG, and it starts counting TOs since it last received a beacon (shown in bold in Figure 10). Similarly, the recovered Node 0 starts its own count (shown in italics in Figure 10). For the example of Figure 10, the count for Node 0 exceeds its wake-up threshold value before the count for Node 6 exceeds its active -up threshold value. Therefore, Node 0 is set as the new in-use beacon generator (ABG) and it starts transmitting beacons such that the PLCA bus can continue to operate. Node 6 stays as a BBG.

The examples described herein can set a candidate beacon generator as the in-use beacon generator in one of a number of different ways. Two alternative implementations of this functionality will now be described.

### Implementation 1

The candidate beacon generator that is to be used as the in-use beacon generator can be assigned a nodeId of zero. The IEEE standard defines that the node with nodeId=0 is the beacon generator. Therefore, to keep to the standard as much as possible, when a BBG assumes the role of the in-use beacon generator, a nodeId reassignment is performed for that BBG node so that it will operate as the new ABG. That is, when a BBG detects a beacon timeout (because an associated threshold has been exceeded), it will change its local_nodeID to 0. This will mean that this BBG will become the new ABG, and also make use of the TO when curID == 0. Furthermore, this means that the TO for their original local_nodeID becomes unused, which results in wasted bandwidth.

In some examples, a non-zero nodeId may be assigned to each of the candidate beacon generators that are not the in-use beacon generator. For example, such that a failed in-use beacon generator (i.e., one that was the in-use beacon generator before it failed) is provided with a different nodeId such that when it recovers it does not clash with the new in-use beacon generator.

In some examples, assigning a nodeId of zero to the candidate beacon generator comprises changing the nodeId from a previous-value to zero. In which case, the network can determine whether or not the previous-value corresponded to a last transmit opportunity in the PLCA cycle. If the previous-value did correspond to the last transmit opportunity in the PLCA cycle, then the network can reduce the plca_node_count by one. This can be considered as an optional improvement: if the original local_nodeID was the last TO before a beacon, the BBG that became ABG can reduce its plca_node_count by 1 to remove that last TO and therefore save bandwidth.

In examples where assigning a nodeId of zero to the candidate beacon generator comprises changing the nodeId from a previous-value to zero, the network can store the previous-value in memory. Subsequently, in response to another candidate beacon generator being set as the in-use beacon generator, the network can assign the previous-value as the nodeId for the candidate beacon generator, thereby replacing the nodeId that was temporarily assigned while the candidate beacon generator was functioning as the in-use beacon generator.

We will now consider the scenario where the local_nodeID of 0 has been taken over by the new ABG, and the original ABG recovers. Optionally, the original ABG can find an opportunity to take over as ABG again, forcing the other ABG to go back to its original local_nodeID. As another option, the original ABG can be assigned the local_nodeID of the node that took over as ABG. Thereby, essentially becoming that node.

### Implementation 2

In this implementation, setting a candidate beacon generator as the in-use beacon generator includes assigning the nodeId of that candidate beacon generator as an activeBeaconGeneratorNodeId. The activeBeaconGeneratorNodeId identifies which of the plurality of communications nodes should function as the in-use beacon generator. In this way, a state machine associated with the Ethernet network can set the in-use beacon generator based on the value of the activeBeaconGeneratorNodeId.

This implementation can provide good flexibility because the backup beacon generator node proxies the original beacon generator.

In this implementation, the candidate beacon generator nodes check local_NodeId == activeBeaconGeneratorNodeId. This is in contrast to the IEEE standard, for which a check of the current local_nodeID == 0 in their PLCA FSM is made to determine whether or not the node should operate as the in-use beacon generator. A BBG then changes their activeBeaconGeneratorNodeId to their own local_nodeID if a threshold is exceeded such that it should assume the role of ABG.

The TO of the original ABG will not be used by the BBG, and thus remains free for the original ABG to use when it comes back online. If the TO of the original ABG is used again, then this is a way to detect that the original ABG is back online. Optionally, this could mean the former ABG can be reverted back to the original (this functionality is not shown in Figures 4 to 10). Alternatively, once the original ABG has gone offline and a BBG has become the new ABG, the original ABG coming back online would simply mean it becomes a BBG as it is beacon generation capable (as shown in Figures 8 and 9). A candidate beacon generator that has recovered in this way will follow the beacon that is being transmitted by the new in-use beacon generator and can transmit data in its own TO though, so it will still be functional. If the new in-use beacon generator fails, then the original in-use beacon generator can take over again.

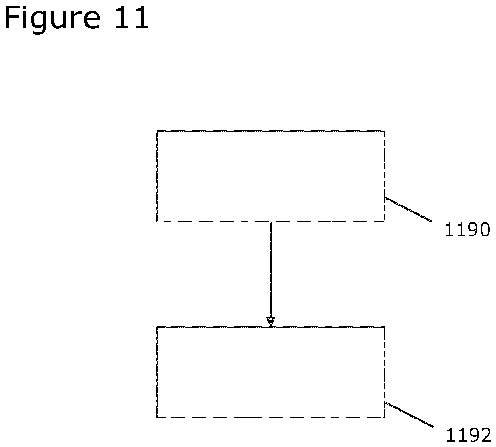

Figure 11 illustrates an example of a method of operating a plurality of communications nodes in a 10BASE-T1S Ethernet network according to the present disclosure. As discussed above, the plurality of communications nodes are configured to implement a physical layer collision avoidance (PLCA) process, and at least two of the communications nodes are candidate beacon generators (i.e. capable of transmitting a beacon to define the start of a PLCA cycle).

At step 1190, the method comprises: for each of the at least two candidate beacon generators, determining a time delay since a last received beacon, comparing the determined time delay with a threshold value associated with the candidate beacon generator, and if the time delay exceeds the threshold value then setting that candidate beacon generator as an in-use beacon generator.

At step 1192, the method includes the in-use beacon generator transmitting a beacon to define the start of a PLCA cycle, thereby triggering a transmit opportunity for each of the other communication nodes.

As discussed in detail above, the method of Figure 11 advantageously provides redundancy such that the Ethernet network can continue to utilise PHY-Level Collision Avoidance (PLCA), even if an in-use beacon generator fails.

As discussed above, IEEE 802.1cg standardizes the base PLCA procedure. This procedure, as it currently stands, does not ensure that the bus remains PLCA functional after a failure of a beacon generator. Examples discussed herein provide a redundant beacon generator for the PLCA cycle. They can also allow for multiple back up options inside the same network.

Examples disclosed herein can deterministically use active and backup beacon generators (ABG and BBG) and provide multiple methods to specifically cover the loss of a beacon generator. This includes the concepts of Active and Backup Beacon Generators to keep wired networks functional, which can swap depending on a required situation. Such examples can observe the bus to understand its state before (re)joining the bus. These examples do not require back off mechanisms.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A method of operating a plurality of communications nodes in a 10BASE-T1S Ethernet network, wherein the plurality of communications nodes are configured to implement a physical layer collision avoidance, PLCA, process, and wherein at least two of the communications nodes are candidate beacon generators, wherein the method comprises:
for each of the at least two candidate beacon generators, determining a time delay since a last received beacon, comparing the determined time delay with a threshold value associated with the candidate beacon generator, and if the time delay exceeds the threshold value then setting that candidate beacon generator as an in-use beacon generator; and
the in-use beacon generator transmitting a beacon to define the start of a PLCA cycle, thereby triggering a transmit opportunity for each of the other communication nodes.

2. The method of claim 1, wherein each of the candidate beacon generators comprises a nodeId.

3. The method of claim 2, wherein setting a candidate beacon generator as the in-use beacon generator comprises assigning the nodeId of that candidate beacon generator as an activeBeaconGeneratorNodeId, which identifies which of the plurality of communications nodes should function as the in-use beacon generator.

4. The method of claim 2, wherein setting a candidate beacon generator as the in-use beacon generator comprises assigning a nodeId of zero to that candidate beacon generator.

5. The method of claim 4, further comprising assigning a non-zero nodeId to each of the candidate beacon generators that are not the in-use beacon generator.

6. The method of claim 4 or claim 5, wherein assigning a nodeId of zero to the candidate beacon generator comprises changing the nodeId from a previous-value to zero;
the method further comprising:
determining whether or not the previous-value corresponded to a last transmit opportunity in the PLCA cycle; and
if the previous-value did correspond to the last transmit opportunity in the PLCA cycle, then reducing the plca_node_count by one.

7. The method of claim 5 or claim 6, wherein assigning a nodeId of zero to the candidate beacon generator comprises changing the nodeId from a previous-value to zero; the method further comprising:
storing the previous-value in memory; and
assigning the previous-value as the nodeId for the candidate beacon generator in response to another candidate beacon generator being set as the in-use beacon generator.

8. The method of any preceding claim, wherein a different threshold value is associated with each of the candidate beacon generators.

9. The method of any preceding claim, wherein the method further comprises:
determining if each candidate beacon generator is in a wake-up mode of operation or an active mode of operation;
if a candidate beacon generator is in the wake-up mode of operation, then comparing the determined time delay with a wake-up threshold value for the candidate beacon generator;
if a candidate beacon generator is in the active mode of operation, then comparing the determined time delay with an active threshold value for the candidate beacon generator.

10. The method of claim 9, wherein the active threshold value for a candidate beacon generator is different to the wake-up threshold value for the candidate beacon generator.

11. The method of claim 9 or claim 10, wherein the active threshold value for a first candidate beacon generator is greater than the wake-up threshold value for the first candidate beacon generator.

12. The method of any one claims 9 to 11, wherein the active threshold value for a second candidate beacon generator is shorter than the wake-up threshold value for the second candidate beacon generator.

13. The method of any one of claims 9 to 12, wherein the wake-up threshold value for one of the candidate beacon generators is shorter than the wake-up threshold value for another candidate beacon generator.

14. The method of any preceding claim, wherein: the threshold values are based on integer multiples of the duration of a transmit opportunity; and / or the threshold values are based on integer multiples of the duration of a PLCA cycle.

15. A network configured to perform the method of any preceding claim.
